**Europäisches Patentamt**

(19) **European Patent Office**

**Office européen des brevets**

(11) Publication number: **0 125 037**

**A1**

(12) # EUROPEAN PATENT APPLICATION

(21) Application number: **84302438.1**

(22) Date of filing: **10.04.84**

(51) Int. Cl.³: **H 01 M 2/12**
**H 01 M 6/14**

(30) Priority: **11.04.83 US 484073**

(43) Date of publication of application:
**14.11.84 Bulletin 84/46**

(84) Designated Contracting States:
**DE FR GB**

(71) Applicant: **GTE COMMUNICATIONS PRODUCTS CORPORATION**
**100 West 10th Street**
**Wilmington Delaware(US)**

(72) Inventor: **Goebel, Franz**
**20, Musket Lane**
**Sudbury Massachusetts 01775(US)**

(74) Representative: **Bubb, Antony John Allen et al,**
**GEE & CO. Chancery House Chancery Lane**
**London WC2A 1QU(GB)**

(54) Electrochemical cell.

(57) A hermetically-sealed electrochemical cell having a pressure and temperature senstitive vent structure (35). An opening (36) in the walls of the cell housing is covered with a thin membrane (37) which is hermetically sealed to the walls. A mass of fusible material (41) is located between the membrane (37) and a dish-shaped cap (38) on the exterior of the housing. A pointed projection (39) extends from the cap (38) to closely adjacent to the central region of the membrane (37). When the fusible material (41) is in the solid state, pressure within the housing does not deflect the membrane (37). When the temperature is high enough to melt the fusible material (41), pressure within the chamber deflects the membrane (37) outwardly against the pointed projection (39) puncturing the membrane (37) and forming a passageway allowing the pressure within the housing to be relieved.

Fig.1.

Fig.2.

# ELECTROCHEMICAL CELL

This invention relates to electrochemical cells. More particularly, it is concerned with hermetically sealed electrochemical cells having a pressure relief vent.

The class of primary electrochemical cells which employs soluble or liquid cathode materials, as opposed to the more conventional solid cathode cells, has become well known. In these cells the active cathode material is a fluid solvent for an electrolyte solute which provides conductivity, and the active anode material is a highly electropositive metal. Typically these cells include an anode material of lithium and a liquid cathode material of an oxyhalide, specifically thionyl chloride with a solute of lithium tetrachloroaluminate. Cells of this type are among the highest energy density packages currently known. Thus, under certain failure conditions causing the components of the cell to react with each other over a very short period of time all of the energy of the electrochemical system is released at once with possible undesirable consequences.

In order to alleviate certain of the internal conditions in a hermetically sealed electrochemical cell, namely high pressure, which might precede catastrophic failure a pressure relief valve or vent is built into the cell housing. Even under normal, safe operating conditions, however, these cells develop increased internal pressures. Thus, a pressure relief vent may operate unnecessarily to relieve internal pressure disabling the cell even though the cell is functioning normally and safely.

A hermetically sealed electrochemical cell in accordance with the present invention having an improved vent structure includes a housing having walls defining a hermetically sealed chamber. An electrochemical system is disposed within the chamber. A pressure and temperature sensitive vent structure is provided which comprises a portion of the walls of the housing which are susceptible to deflection in response to pressure within the chamber. A temperature sensitive means is provided which includes a mass of fusible material adjacent to the portion of the walls and operable to prevent deflection of the portion when the fusible material is in the solid state and to permit deflection of the portion when the fusible material is in the molten stage. The pressure and temperature sensitive vent structure also includes perforating means adjacent to the the portion of the walls which operates to puncture the portion and produce a passageway therethrough from the chamber to the exterior of the housing upon deflection of the portion. Thus, in response to sufficient temperature and pressure the fusible material melts and the portion of the walls deflects and is punctured by the perforating member producing a passageway to the exterior from the chamber thereby reducing the pressure within the chamber.

In the drawings:

FIG. 1 is an elevational view partially in cross section of an electrochemical cell including a vent structure in accordance with the present invention;

FIG. 2 is a plan view of the electrochemical cell of FIG. 1;

FIG. 3 is a cross-sectional view of a portion of the cell illustrating the vent structure taken generally along line 3-3 of FIG. 2; and

FIG. 4 is a cross-sectional view similar to that of FIG. 3 illustrating a modified vent structure.

For a better understanding of the present invention, together with other and further objects, advantages and capabilities thereof, reference is made to the following discussion and appended claims in connection with the above-described drawings.

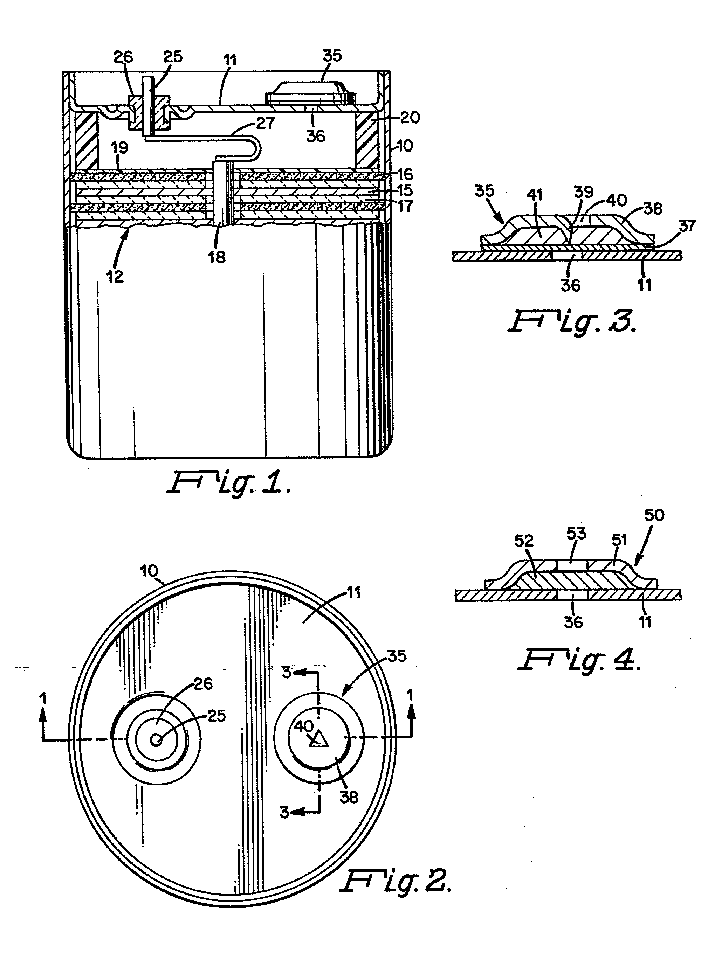

FIGS. 1 and 2 illustrate an electrochemical cell, specifically of the lithium/oxyhalide type, having a housing including a case 10 of a suitable metal, specifically stainless steel or nickel, and a cover 11 of the same material which is welded to the case so as to provide a hermetically sealed chamber within the housing. As illustrated the case 10 is cylindrical with the end wall, or bottom, opposite the cover integral with the side walls of the case.

The chamber within the housing contains an electrochemical system which includes a stack 12 of electrochemical cell elements. Any of various known arrangements of electrochemical stacks may be employed such as, for example, that disclosed in U. S. Patent No. 4,284,691 entitled "Electrochemical Cell" which issued on August 18, 1981, to Franz Goebel and William T. McHugh. The arrangement as illustrated includes an alternating stack 12 of anode discs 15 containing lithium as the active anode material and discs 16 of porous carbon conglomerate material which serve as cathode current collectors. Intervening between the cathode current collectors 16 and anode members 15 are discs 17 of insulating material which serve as separators. As illustrated in FIG. 1 the anode discs 15 make contact to a centrally mounted rod, or post, 18 of conductive material. They are of small enough diameter such that they do not make contact with the side walls of the case 10. The cathode current collector discs 16 have sufficiently large central openings such that they do not make contact with the center post 18. Their outer diameter is such that they make contact with the inner surface of the side walls of the conductive case 10. The elements of the stack 12 are held in place in the chamber by an insulating washer 19 and an insulating retaining ring 20 between the washer 19 and the cover 11. The cell contains a liquid cathode material, specifically thionyl chloride with lithium tetrachloroaluminate dissolved therein.

An electrical terminal 25 extending from the chamber to the exterior is sealed in the cover by an insulating glass-to-metal seal. The terminal 25 is connected to the center post 18 by a suitable conductor 27. Thus, the terminal 25 is the negative terminal of the cell, and the housing is the positive terminal.

In accordance with the present invention the electrochemical cell includes a vent structure 35. Details of the vent structure 35 may best be seen in the fragmentary cross-sectional view of FIG. 3. The vent structure 35 includes a hole or opening 36 in the walls of the housing, specifically in the cover 11. A membrane 37 in the form of a disc is placed over the opening 36 and is welded at its periphery to provide a hermetic seal. The membrane 37 is of the same material as the cover, typically nickel or stainless steel, and is relatively thin compared to the remainder of the walls of the housing.

The vent structure 35 also includes a dish-shaped cap or cover member 38 having the same external diameter as the membrane 37, and the peripheral edges of its side walls are welded to the periphery of the membrane 37. The dish-shaped cap is of approximately the same thickness and preferably is of the same material as the walls of the housing. The cap 38 provides a space enclosed by its end wall, its side walls, and the membrane 37. The space is filled with a fusible material 41 the detailed characteristics of which will be described hereinbelow. A pointed projection 39 which serves as a perforating member extends from the end wall of the cap to closely adjacent to the surface of the membrane 37, preferably in its central region. The end wall of the cap 38 has an opening 40 therein. The pointed projection 39 may be formed from material of the end wall of the cap by the use of a suitable triangularly-shaped die thereby simultaneously forming the opening 40.

Under conditions of high pressure within the cell the pressure on the membrane 37 acting through the opening 36 would tend to deflect the thin membrane 37 which is fixed to the cover 11 at its periphery. However, the rigid structure provided by the solid fusible material 41 held firmly by the cap 38 prevents flexing of the membrane and thus pressure alone cannot deflect the membrane 37. As explained hereinabove, the existence of high pressure within a lithium/oxyhalide cell in itself does not indicate an undesirable condition. However, the combination of high internal pressure together with an elevated temperature does indicate a potentially serious condition. In particular, since lithium melts at about 180°C and when molten may react explosively with thionyl chloride, it is desirable to disable a cell before this temperature is reached.

The mass of fusible material 41 filling the space between the cap 38 and the membrane 37 is of a material having a melting point lower than that of lithium. Thus, when a sufficiently high temperature has been reached foretelling a potentially serious situation, the fusible material 41 melts. With the loss of the rigid reinforcing structure due to the mass of fusible material 41 becoming liquid together with the presence of the opening 40 in the cap 38 to provide an escape vent, the membrane 37 is permitted to deflect outwardly in response to the build up of pressure in the chamber. Movement of the membrane 37 a suitable distance causes it to be punctured by the sharp point of the perforating member 39. With the membrane 37 punctured, a passageway is formed from the interior of the chamber to the exterior of the housing relieving the internal pressure within the chamber.

0125037

In a specific embodiment of a lithium/thionyl chloride electrochemical cell of structure as shown the height of the cell was approximately 2 inches and the diameter was approximately 1-3/4 inches. The case 10 and cover 11 were of stainless steel .020 inch thick. The diameter of the opening 36 in the cover was about 1/8 inch and the diameter of the membrane which was also of stainless steel was approximately 1/2 inch. The membrane 37 was between .002 and .003 inch thick, although thicknesses between .001 and .004 inch have been found to be suitable. The height of the cap 38 above the surface of the cover 11 was about 1/8 inch. Although various fusible materials may be used, an alloy of 55.5 percent by weight bismuth and 44.5 percent by weight lead has been found particularly satisfactory. This alloy melts at slightly over 100°C. With the specific arrangement as described the membrane 37 was perforated by the pointed projection 39 when the bismuth-lead alloy melted and the pressure within the chamber reached approximately 50 pounds per square inch.

A modification of a vent structure 50 for an electrochemical cell in accordance with the present invention is illustrated in FIG. 4. The modified vent structure is suitable for use in electrochemical cells employing an electrochemical system with components that do not react with the fusible material. The vent structure 50 includes a hole or opening 36 in the walls of the housing, specifically in the cover 11. A dish-shaped cap or cover member 51 overlies the opening 36 and the region of the cover encircling the opening. The peripheral edges of the side walls of the cap 51 are welded to the cover. The cap 51 provides a space enclosed by its end wall, its side walls, and the surface of the cover 11. The end wall of the cap 51 has an opening 50 providing a passage from the space to the exterior of the cap. The space is filled with a fusible material 52 of the nature as described hereinabove. Also as indicated previously, the fusible material is inert to the elements of the electrochemical system of the cell. The mass of fusible material 52 within the space hermetically seals the opening 36.

Under conditions of high pressure within the cell the rigid structure provided by the solid fusible material 52 held firmly by the cap 51 maintains the hermetic seal. When a sufficiently high temperature has been reached, the fusible material 52 melts. With the loss of the rigid structure due to the mass of fusible material 52 becoming liquid together with the presence of the opening 36 in the wall of the housing and the opening 53 in the cap 51, pressure within the chamber forces molten fusible material through the opening 53 in the cap 51 forming a passageway from the chamber to the exterior relieving the pressure within the chamber.

While there has been shown and described what is considered a preferred embodiment of the present invention, it will be obvious to those skilled in the art that various changes and modifications may be made therein without departing from the invention as defined by the appended claims.

CLAIMS:

1. A hermetically sealed electrochemical cell comprising
   a housing having walls defining a hermetically sealed chamber;
   an electrochemical system disposed within said chamber; and
   a pressure and temperature sensitive vent structure comprising
   a portion of said walls of the housing susceptible to deflection in response to pressure within said chamber,
   temperature sensitive means including a mass of fusible material adjacent to said portion of the walls and operable to prevent deflection of said portion when the fusible material is in the solid state and to permit deflection of said portion when the fusible material is in the molten state, and
   perforating means adjacent to said portion and operable to puncture said portion and produce a passageway therethrough from the chamber to the exterior of the housing upon deflection of said portion;
   whereby in response to sufficient temperature and pressure, said fusible material melts and said portion of the walls deflects and is punctured by said perforating means producing a passageway to the exterior from the chamber thereby reducing the pressure within the chamber.

2. A hermetically sealed electrochemical cell in accordance with claim 1 wherein
   said portion of said walls of the housing susceptible to deflection includes a membrane thinner than the remainder of said walls.

3.    A hermetically sealed electrochemical cell in accordance with claim 2 wherein

said temperature sensitive means includes a member exterior of said chamber retaining said mass of fusible material contiguous said membrane when said mass of fusible material is in the solid state; and

said perforating means includes a pointed projection fixed to said member and extending into said mass of fusible material to closely adjacent to said membrane.

4.    A hermetically sealed electrochemical cell in accordance with claim 3 wherein said electrochemical system comprises

an oxidizable active anode;

a cathode current collector; and

an electrolytic solution, in contact with the anode and the cathode current collector, comprising a reducible liquid cathode material and an electrolyte solute dissolved therein.

5.    A hermetically sealed electrochemical cell in accordance with claim 4 wherein

said oxidizable active anode includes lithium; and

. said fusible material has a melting point lower than the melting point of lithium.

6.    A hermetically sealed electrochemical cell comprising a housing having walls of conductive material defining a hermetically sealed chamber;

an electrochemical system disposed within said chamber;

a conductive terminal extending through said walls from the chamber to the exterior thereof, said terminal being electrically insulated from the walls and being connected to an element of the electrochemical system;

a pressure and temperature sensitive vent structure comprising

an opening through said walls from the chamber to the exterior thereof,

a membrane overlying said opening on the exterior of the walls and sealed thereto to provide a hermetic seal for the chamber, the membrane being thinner than the walls and being susceptible to deflection in response to pressure within the chamber,

a cap member overlying said membrane and providing a space between said cap member and said membrane,

a mass of fusible material within said space operable to prevent deflection of said membrane when the fusible material is in the solid state and to permit deflection of said membrane when the fusible material is in the molten state, and

a perforating member fixed to the cap member and extending through the mass of fusible material to adjacent to said membrane and operable to puncture the membrane and produce a passageway therethrough from the chamber to the exterior thereof upon deflection of said membrane a predetermined amount;

whereby in response to temperature sufficient to melt said mass of fusible material and pressure within the chamber sufficient to deflect the membrane said predetermined amount, said membrane is punctured producing a passageway from the chamber to the exterior thereof thereby reducing the pressure within the chamber.

7.    A hermetically sealed electrochemical cell in accordance with claim 6 wherein

    said housing is of generally cylindrical configuration having cylindrical side walls, an end wall at one end, and a cover at the other end; and

    said pressure and temperature sensitive vent structure is located at said cover.

8.    A hermetically sealed electrochemical cell in accordance with claim 7 wherein

    said cap member is generally dish-shaped having an end wall and side walls;

    said side walls of the cap member being fixed to the walls of the housing at the periphery of said side walls; and

    said end wall of the cap member having an opening therein providing a passage therethrough from said space to the exterior of the cap member.

9.    A hermetically sealed electrochemical cell in accordance with claim 8 wherein said electrochemical system comprises

    an oxidizable active anode;

    a cathode current collector; and

    an electrolytic solution, in contact with the anode and the cathode current collector, comprising a reducible liquid cathode material and an electrolyte solute dissolved therein.

10. A hermetically sealed electrochemical cell in accordance with claim 9 wherein

said oxidizable active anode includes lithium; and

said fusible material has a melting point lower than the melting point of lithium.

Fig.1.

Fig.2.

Fig.3.

Fig.4.

European Patent Office

| | DOCUMENTS CONSIDERED TO BE RELEVANT | | EP 84302438.1 |
|---|---|---|---|

| Category | Citation of document with indication. where appropriate, of relevant passages | Relevant to claim | CLASSIFICATION OF THE APPLICATION (Int. Cl. ³) |
|---|---|---|---|
| Y | GB - A - 2 052 137 (SANYO ELECTRIC) <br> * Fig. 2; abstract * | 1-4,6-8 | H 01 M 2/12 <br> H 01 M 6/14 |
| Y | EP - A1 - 0 049 080 (UNION CARBIDE) <br> * Fig. 5; page 4, line 30 - page 5, line 8 * | 1-4,6-8 | |
| A | * Claims 1,10,12 * | 5,9,10 | |
| A | GB - A - 2 080 012 (GENERAL ELECTRIC) <br> * Fig. 1; abstract * | 1,2,6-8 | |
| D,A | US - A - 4 284 691 (GOEBEL et al.) <br> * Fig. 1; abstract * | 1,4,5,9,10 | |

TECHNICAL FIELDS SEARCHED (Int. Cl. ³)

H 01 M

The present search report has been drawn up for all claims

| Place of search <br> VIENNA | Date of completion of the search <br> 17-07-1984 | Examiner <br> LUX |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document